# EUROPÄISCHE PATENTANMELDUNG

(11) **EP 4 775 379 A1**
(43) Veröffentlichungstag der Anmeldung: **15.07.2026**
(21) Anmeldenummer: 25150752.1
(22) Anmeldetag: 08.01.2025
(51) Int. Cl.: B29C 49/04, B29C 49/20, B29K 223/00, B29L 23/00, B29L 31/30

(54) **ANORDNUNG FÜR DEN TRANSPORT VON MEDIEN UND VERFAHREN ZUR HERSTELLUNG EINER ANORDNUNG**

(71) Anmelder: TI Automotive Technology Center GmbH, 76437 Rastatt (DE)
(72) Erfinder: Kizilay, Irfan, 68799 Reilingen (DE); Leipold, Stefan, 67470 Seltz (FR); Lindow, Manuel, 76593 Gernsbach (DE); Deibel, Florian, 76547 Sinzheim (DE)
(74) Vertreter: Reiser & Partner Patentanwälte mbB

(57) **Zusammenfassung**

Die Erfindung betrifft eine Anordnung (1) für den Transport von Medien, umfassend einen als Blasformteil ausgebildeten Grundkörper (2), der wenigstens einen Einlasskanal (5) und wenigstens einen Auslasskanal (6) und zumindest ein Funktionselement (3) aufweist, wobei das Funktionselement (3) durch Umformen des Grundkörpers (2) während des Blasformens formschlüssig mit dem Grundkörper (2) verbunden ist, wobei das Funktionselement (3) wenigstens eine Einströmöffnung (7) aufweist, welche mit dem Einlasskanal (5) des Grundkörpers (2) strömungsleitend verbunden ist, und wenigstens eine Ausströmöffnung (8), welche mit dem Auslasskanal (6) des Grundkörpers (2) strömungsleitend verbunden ist, wobei die strömungsleitenden Verbindungen von Einströmöffnung (7) und Ausströmöffnung (8) durch das Umformen des Grundkörpers (2) während des Blasformens ausgebildet sind. Zudem betrifft die Erfindung ein Verfahren zur Herstellung einer Anordnung (1) für den Transport von Medien.

## Beschreibung

Die Erfindung betrifft eine Anordnung für den Transport von Medien, umfassend einen als Blasformteil ausgebildeten Grundkörper und zumindest ein Funktionselement, welches an dem Grundkörper festgelegt ist. Zudem betrifft die Erfindung ein Verfahren zur Herstellung einer Anordnung für den Transport von Medien.

Anordnungen für den Transport von Medien werden beispielsweise in der Elektromobilität benötigt. Akkumulatoren von Elektrofahrzeugen, insbesondere Lithium-Ionen-Akkumulatoren, werden beispielsweise in Abhängigkeit von der Umgebungstemperatur aktiv gekühlt oder erwärmt, da diese eine optimale Leistungsfähigkeit nur innerhalb eines definierten Temperaturbereichs erreichen. Die Antriebseinheit eines Elektrofahrzeugs weist deshalb in der Regel einen Temperierkreislauf mit einer Rohranordnung auf, durch welche beispielsweise Temperiermedien zu den Zellen des Akkumulators geleitet werden, um diese innerhalb eines erforderlichen Temperaturspektrums zu temperieren.

Ebenso können auf diese Weise weitere Komponenten der Antriebseinheit von Elektrofahrzeugen, beispielsweise die Leistungselektronik, der Elektromotor, die Ladeelektronik und die entsprechenden Steckverbindungen und Leitungen, temperiert, insbesondere gekühlt, werden, was insbesondere im Zusammenhang mit Schnellladevorgängen von Bedeutung ist.

Auch die sonstige Fahrzeugelektronik, insbesondere Sensoren und Bordcomputer, erfordern eine entsprechende Kühlung. Ist ein Fahrzeug zum autonomen Fahren ausgerüstet, werden leistungsfähige Sensoren und leistungsfähige Rechner benötigt, wobei die Systeme zumeist redundant vorhanden sind. Aufgrund des beschränkten Bauraums in den Fahrzeugen ergeben sich auch bei diesen Systemen besondere Anforderungen an eine Temperiereinrichtung zur Temperierung dieser Komponenten.

Zudem kommen zur Temperierung von Innenräumen der Fahrzeuge Klimaanlagen zum Einsatz, bei denen Temperiermedien in einer komplexen Rohranordnung zwischen den einzelnen Aggregaten der Klimaanlage zirkuliert werden. In eine solche Rohranordnung sind weitere Komponenten integriert, beispielsweise Funktionselemente, Pumpen, Ventile, Sensoren oder dergleichen, wodurch die Rohranordnung ein vergleichsweise komplexes Gebilde darstellt, welches insbesondere bei mobilen Klimaanlagen platzsparend zu integrieren ist. Ein weiteres Einsatzgebiet ist die Temperierung von stationären Energiespeichern.

Die zunehmende Komplexität solcher Systeme stellt immer neue Anforderungen an die Ausgestaltung von Anordnungen für den Transport von Medien, weshalb eine kontinuierliche Verbesserung der Integration von Funktionselementen, eine stetige Optimierung von Strömungsführungen sowie die Reduzierung eines Montageaufwands solcher Anordnungen erforderlich sind.

Der Erfindung liegt die Aufgabe zugrunde, eine Anordnung für den Transport von Medien sowie ein Verfahren zur Herstellung einer Anordnung für den Transport von Medien bereitzustellen, welche einfach und kostengünstig herstellbar ist.

Diese Aufgabe wird mit den Merkmalen der Ansprüche 1 und 12 gelöst. Auf vorteilhafte Ausgestaltungen nehmen die Unteransprüche jeweils Bezug.

Die erfindungsgemäße Anordnung für den Transport von Medien umfasst einen als Blasformteil ausgebildeten Grundkörper, der wenigstens einen Einlasskanal und wenigstens einen Auslasskanal und zumindest ein Funktionselement aufweist, wobei das Funktionselement durch Umformen des Grundkörpers während des Blasformens formschlüssig mit dem Grundkörper verbunden ist, wobei das Funktionselement wenigstens eine Einströmöffnung und eine Ausströmöffnung aufweist, wobei die Einströmöffnung mit dem Einlasskanal des Grundkörpers und die Ausströmöffnung mit dem Auslasskanal des Grundkörpers strömungsleitend verbunden ist, wobei die strömungsleitenden Verbindungen von Einströmöffnung und Ausströmöffnung durch das Umformen des Grundkörpers während des Blasformens ausgebildet sind.

Durch die formschlüssige Verbindung zwischen dem Grundkörper und dem Funktionselement sind diese fest und mediendicht miteinander verbunden. Dabei ist es insbesondere nicht erforderlich, zusätzliche Dichtungselemente zwischen dem Grundkörper und dem Funktionselement vorzusehen. Indem das Funktionselement sowohl die Einströmöffnung als auch die Ausströmöffnung aufweist, kann eine kompakte Ausgestaltung der Anordnung erreicht werden, die über die Einströmöffnung ein Einleiten von Medien in den Einlasskanal und über die Ausströmöffnung ein Ausleiten von Medien aus dem Auslasskanal ermöglicht oder umgekehrt. Dadurch, dass die strömungsleitenden Verbindungen zwischen der Einströmöffnung und dem Einlasskanal und zwischen der Ausströmöffnung und dem Auslasskanal durch das Umformen des Grundkörpers während des Blasformens ausgebildet sind, ist zudem eine einfache und kostengünstige Herstellung der Anordnung erreicht, die ein solches Ausleiten von Medien aus der Anordnung sowie das Einleiten von Medien in die Anordnung ermöglicht.

Eine vorteilhafte Ausführungsform der Anordnung kann vorsehen, dass der Einlasskanal und der Auslasskanal als separate Strömungskanäle ausgebildet sind. Auf diese Weise können der Einlass- und der Auslasskanal zwei voneinander getrennte Strömungsbereiche in dem Grundkörper bilden, um beispielsweise ein Medium aus dem Auslasskanal ausleiten und in den Einlasskanal wieder einleiten zu können oder um verschiedene Medien durch den Einlasskanal und den Auslasskanal transportieren zu können. Wenn der Einlasskanal und der Auslasskanal als separate Strömungskanäle ausgebildet sind, kann beispielsweise das Medium in dem Einlasskanal auf einem anderen Druck- und/oder Temperaturniveau transportiert werden als in dem Auslasskanal. Bildet die Anordnung beispielsweise einen Abschnitt von einem Kühl- oder Kältemittelkreislauf einer Klimaanlage, kann ein Kühl- oder Kältemittel aus dem Auslasskanal ausgeleitet werden, um einer Komponente der Klimaanlage zugeführt zu werden und um anschließend auf einem anderen Druck- und/oder Temperaturniveau wieder in den Einlasskanal eingeleitet zu werden.

Bevorzugt können der Einlasskanal und der Auslasskanal durch das Umformen des Grundkörpers während des Blasformens ausgebildet sein. Hierzu kann der Grundkörper ein Material umfassen oder durch ein Material gebildet sein, das eine Schmelztemperatur aufweist, die in einem für das Blasformen eines Vorformlings erforderlichen Temperaturbereich liegt. Insbesondere kann die Schmelztemperatur derart gewählt sein, dass ein Erweichen und eine plastische Verformbarkeit des Vorformlings ermöglicht sind, jedoch eine Verformung oder gar ein Schmelzen des Funktionselements verhindert werden.

Eine weitere vorteilhafte Ausführungsform der Anordnung kann vorsehen, dass das Funktionselement eine Kopplungseinrichtung aufweist, durch welche eine Gehäusekomponente mit dem Funktionselement derart koppelbar ist, dass die Einströmöffnung und Ausströmöffnung strömungsleitend in Verbindung stehen. Die Gehäusekomponente kann insbesondere ausgebildet sein, ein Ventil, eine Pumpe, einen Sensor oder einen Kühler aufzunehmen. Beispielsweise kann die Gehäusekomponente einen Aufnahmeraum bilden, in dem das Ventil, die Pumpe, der Sensor oder der Kühler anordenbar und mit der Einströmöffnung und der Ausströmöffnung strömungsleitend verbindbar ist.

Der durch die Gehäusekomponente gebildete Aufnahmeraum kann fluiddicht zu einer Außenseite der Anordnung ausgebildet sein. Durch das Koppeln einer solchen Gehäusekomponente mit dem Funktionselement kann das Medium über die Ausströmöffnung aus dem Auslasskanal in die Gehäusekomponente geleitet werden, um dem Ventil, der Pumpe, dem Sensor oder dem Kühler zugeführt zu werden, und über die Einströmöffnung wieder in den Einlasskanal geleitet werden. Dadurch, dass über die Kopplungseinrichtung eine solche Gehäusekomponente mit dem Funktionselement koppelbar ist, kann eine kompakte Integration verschiedener Komponenten, insbesondere des Ventils, der Pumpe, des Sensors oder des Kühlers, in die Anordnung ermöglicht sein. Dabei kann die Kopplungseinrichtung durch eine beliebige formschlüssige und/oder kraftschlüssige Verbindung zum Koppeln der Gehäusekomponente ausgebildet sein. Beispielsweise kann die Kopplungseinrichtung durch eine Schraub-, Niet-, Rast-, Clips-, Schweiß- oder Klebeverbindung oder durch eine beliebige andersartig ausgestaltete Verbindungseinrichtung ausgebildet sein.

In einer Weiterbildung der Anordnung kann die Kopplungseinrichtung wenigstens ein die Einströmöffnung umgreifendes Dichtelement und/oder wenigstens ein die Ausströmöffnung umgreifendes Dichtelement aufweisen, wobei in einer Kopplungskonfiguration des Funktionselements mit der Gehäusekomponente ein einströmseitiger Strömungsbereich und ein ausströmseitiger Strömungsbereich zueinander abdichtbar sind. Insbesondere können die Dichtelement als ringförmige, die Öffnung umgebende Dichtelemente ausgebildet sein, beispielsweise in Form von O-Ringen. Vorzugsweise sind die Dichtelemente aus einem elastomeren Material, beispielsweise aus einem Gummimaterial oder einem thermoplastischen Elastomer, ausgebildet. Neben dem Abdichten des einströmseitigen Strömungsbereichs zu dem ausströmseitigen Strömungsbereich können die Dichtelemente ebenso vorgesehen sein, um eine Abdichtung zu einer Außenseite der Anordnung auszubilden.

Gemäß einer vorteilhaften Ausgestaltung der Anordnung kann die Kopplungseinrichtung wenigstens eine Zentriereinrichtung zum Montieren der Gehäusekomponente aufweisen. Diese Zentriereinrichtung kann beispielsweise als ein oder mehrere Absätze, Ausnehmungen, Vorsprünge, Stifte oder dergleichen ausgebildet sein. Insbesondere ist die Zentriereinrichtung als ein Absatz ausgebildet, der außenumfangsseitig zumindest abschnittsweise am Funktionselement ausgebildet ist. Insbesondere ist die Zentriereinrichtung korrespondierend zu der Gehäusekomponente oder zu einer korrespondierenden Zentriereinrichtung an der Gehäusekomponente ausgebildet. Durch die Zentriereinrichtung kann neben einer einfachen und präzisen Montage der Gehäusekomponente an dem Funktionselement auch eine fluiddichte Kopplung ermöglicht sein.

Eine weitere Ausgestaltung der Anordnung kann zudem vorsehen, dass das Funktionselement durch ein im Wesentlichen schalenförmiges Grundelement gebildet ist. Dabei kann das Grundelement eine beliebige geometrische Grundfläche und/oder Querschnittsgeometrie aufweisen. Vorzugsweise ist das Grundelement frei von Hinterschnitten ausgebildet, sodass es beispielsweise einfach im Spritzgießverfahren herstellbar ist. Bevorzugt kann das Funktionselement in einer Draufsicht eine schalenförmige, plattenförmige, scheibenförmige, insbesondere kreisförmige oder ovale, Grundfläche aufweisen. Ebenso kann das Funktionselement in einer Draufsicht eine eckige oder freiförmige Grundfläche bilden. Vorzugsweise ist das Funktionselement aus einem Polymermaterial, beispielsweise einem thermoplastischen Polymer, ausgebildet. Dabei ist das Material des Funktionselements insbesondere derart ausgewählt, dass das Funktionselement während des Blasformens formstabil ist. Vorteilhafterweise liegt die Schmelztemperatur des für das Funktionselement gewählten Kunststoffs daher oberhalb einer für das Blasformen des Vorformlings zum Ausbilden des Grundkörpers erforderlichen Temperatur. Alternativ kann das Funktionselement auch aus einem metallischen Werkstoff ausgebildet sein.

Vorteilhaft kann bei der Anordnung vorgesehen sein, dass das Funktionselement wenigstens eine Dichtkontur aufweist, durch welche das Funktionselement mit dem Grundkörper stoffschlüssig verbunden und der Einlasskanal zu dem Auslasskanal abgedichtet ist, und/oder wenigstens eine Dichtkontur aufweist, durch welche das Funktionselement mit dem Grundkörper stoffschlüssig verbunden und der Einlasskanal und/oder der Auslasskanal zu einer Außenseite abgedichtet sind. Durch eine solche Dichtkontur kann während des Blasformens eine stoffschlüssige Verbindung zwischen dem Funktionselement und dem Grundkörper während des Blasformens ausgebildet werden. Dabei können insbesondere die Schmelztemperaturen des Materials der Dichtkontur und des Vorformlings bzw. Grundkörpers entsprechend aufeinander abgestimmt sein, damit diese während des Blasformens die stoffschlüssige Verbindung bilden. Dabei kann entweder die Dichtkontur aus einem Material bestehen, das eine geringere Schmelztemperatur aufweist als das Material des Grundkörpers, oder der Grundkörper aus einem Material bestehen, das eine geringere Schmelztemperatur aufweist als das Material der Dichtkontur. Ebenso können die Dichtkontur am Funktionselement und der Grundkörper auch aus einem Material bestehen, das eine etwa gleiche Schmelztemperatur aufweist.

Gemäß einer vorteilhaften Ausführungsform der Anordnung kann das Funktionselement einen Aufnahmeraum bilden und der Aufnahmeraum kann eine strömungsleitende Verbindung zwischen der Einströmöffnung und der Ausströmöffnung bilden. Ein solcher Aufnahmeraum kann insbesondere zum Aufnehmen eines Ventils, einer Pumpe, eines Sensors oder eines Kühlers vorgesehen sein. Bevorzugt kann der Aufnahmeraum eine Zugangsöffnung aufweisen, um das Ventil, die Pumpe, den Sensor oder den Kühler in diesen einzubringen. Der Aufnahmeraum kann beispielsweise durch ein Deckelelement fluiddicht verschließbar sein. Ist in dem Aufnahmeraum das Ventil, die Pumpe, der Sensor oder der Kühler angeordnet, ist dieses/diese/dieser strömungsleitend mit der Einströmöffnung und der Ausströmöffnung verbunden. Mit anderen Worten, das Ventil, die Pumpe, der Sensor oder der Kühler kann eine strömungsleitende Verbindung zwischen der Einströmöffnung und der Ausströmöffnung bilden.

Eine Weiterbildung der Anordnung kann zudem vorsehen, dass das Funktionselement einen der Einströmöffnung zugeordneten Einlassstutzen und/oder einen der Ausströmöffnung zugeordneten Auslassstutzen aufweist, wobei der Einlassstutzen in den Einlasskanal und/oder der Auslassstutzen in den Auslasskanal des Grundkörpers mündet. Vorzugsweise kann sich ein Endabschnitt des Einlassstutzens und/oder des Auslassstutzens zumindest abschnittsweise in den Einlasskanal bzw. den Auslasskanal erstrecken. Dabei kann ein Außendurchmesser des Einlassstutzens und/oder des Auslassstutzens kleiner ausgebildet sein als ein Innendurchmesser des Einlasskanals und/oder des Auslasskanals. An dem Endabschnitt des Einlassstutzens und/oder des Auslassstutzens kann eine Dichtkontur vorgesehen sein, um während des Blasformens eine stoffschlüssige und/oder formschlüssige Verbindung zwischen dem Einlassstutzen und/oder Auslassstutzen und dem Grundkörper auszubilden. Dadurch kann eine sichere und fluiddichte Integration des Funktionselements mit dem Grundkörper ermöglicht sein.

Gemäß einer vorteilhaften Ausgestaltung der Anordnung kann zudem vorgesehen sein, dass die Einströmöffnung in einem Bodenabschnitt des Funktionselements ausgebildet ist und/oder die Ausströmöffnung in einem Seitenwandabschnitt des Funktionselements ausgebildet ist.

Vorzugsweise kann sich von der im Bodenabschnitt ausgebildeten Einlassöffnung der Einlassstutzen als Umlenkung erstrecken und seitlich von dem Funktionselement weggeführt sein. Mit anderen Worten, der Einlassstutzen ist als seitliche Umlenkung am Bodenabschnitt des Funktionselements ausgebildet. Vorzugsweise kann sich von der im Seitenwandabschnitt ausgebildeten Ausströmöffnung der Auslassstutzen seitlich von dem Funktionselement weg erstrecken. Vorzugsweise kann vorgesehen sein, dass die Einströmöffnung und die Ausströmöffnung in verschiedene Richtungen weisend am Funktionselement ausgebildet sind. Der Einlassstutzen und der Auslassstutzen können in entgegengesetzte Richtungen oder in unterschiedliche Richtungen weisend am Funktionselement vorgesehen sein.

In einer Weiterbildung der Anordnung kann das Funktionselement durch das Umformen des Grundkörpers während des Blasformens vollständig von dem Grundkörper umhüllt sein. Auf diese Weise kann eine vollständige Integration des Funktionselements in den Grundkörper vorgesehen sein, wodurch eine besonders fluiddichte Abdichtung zu einer Außenseite der Anordnung erreicht werden kann. Das Funktionselement kann sowohl mit dem durch das Funktionselement gebildeten Aufnahmeraum als auch mit der am Funktionselement montierten Gehäusekomponente vollständig von dem Grundkörper umhüllt sein. Dabei kann insbesondere vorgesehen sein, dass das Ventil, die Pumpe, der Sensor oder der Kühler in dem Aufnahmeraum bzw. der Gehäusekomponente angeordnet ist. Durch das Umhüllen des Funktionselements von dem Grundkörper kann eine integrierte bzw. gekapselte Anordnung ausgebildet sein, die einen wartungsfreien Betrieb ermöglichen kann.

Bei dem erfindungsgemäßen Verfahren zur Herstellung einer Anordnung für den Transport von Medien, insbesondere einer Anordnung gemäß einer der zuvor beschriebenen Ausführungsformen, werden zunächst zumindest ein Funktionselement und ein aus polymerem Material bestehender Vorformling bereitgestellt und in einer Blasform angeordnet, wobei aus dem Vorformling ein Grundkörper ausgebildet wird und sich der Vorformling während des Ausformens zur Herstellung einer Verbindung an das Funktionselement anlegt, wobei während des Ausformens des Vorformlings eine strömungsleitende Verbindung zwischen einer Einströmöffnung des Funktionselements und einem Einlasskanal des Grundkörpers und zwischen einer Ausströmöffnung des Funktionselements und einem Auslasskanal des Grundkörpers ausgebildet wird.

Durch ein solches Verfahren kann bevorzugt in nur einem Verfahrensschritt des Blasformens sowohl eine formschlüssige Verbindung zwischen dem Grundkörper und dem Funktionselement als auch die strömungsleitende Verbindung zwischen der Einströmöffnung und dem Einlasskanal und zwischen der Ausströmöffnung und dem Auslasskanal ausgebildet werden. Dabei kann insbesondere ein Nachbearbeiten des Grundkörpers, d. h. ein zusätzlicher Verfahrensschritt, insbesondere ein Entfernen von überschüssigem Material des Grundkörpers im Bereich der Einström- und/oder Ausströmöffnung, entfallen. Dadurch kann eine schnelle und somit kostenoptimierte Herstellung der Anordnung erreicht werden. Hierzu kann vorgesehen sein, dass vor dem Blasformen ein zum Funktionselement korrespondierender Öffnungsabschnitt in den Vorformling eingebracht wird.

Eine Weiterbildung des Verfahrens kann vorsehen, dass sich der Vorformling während des Ausformens derart verformt, dass der Einlasskanal und der Auslasskanal als separate Strömungskanäle des Grundkörpers ausgebildet werden.

Vorzugsweise kann der Vorformling eine rohrförmige Ausgangsform aufweisen, insbesondere mit nur einem zusammenhängenden Innenraum, wobei durch das Blasformen aus einem solchen Vorformling der Grundkörper mit dem Einlasskanal und dem Auslasskanal als separate Strömungskanäle ausgebildet wird und der Einlasskanal und Auslasskanal strömungsleitend mit der Einströmöffnung und der Ausströmöffnung verbunden werden. Die Schmelztemperaturen des Materials des Vorformlings und des Materials des Funktionselements können hierbei bevorzugt derart gewählt sein, dass zum Blasformen ein Erweichen des Vorformlings ermöglicht ist und zwischen Vorformling und Funktionselement ein Schmelzbett entsteht, in welchem sich der Vorformling bzw. der Grundkörper und das Funktionselement verbinden, sodass Grundkörper und Funktionselement nach dem Aushärten stoffschlüssig miteinander verbunden sind. Gleichzeitig soll der Werkstoff des Funktionselements so gewählt sein, dass dieses formstabil während des Blasformens der Temperatur standhält.

In einer vorteilhaften Ausgestaltung des Verfahrens kann in einem durch das Funktionselement gebildeten Aufnahmeraum ein Ventil, eine Pumpe, ein Sensor oder ein Kühler angeordnet werden und die Einströmöffnung und die Ausströmöffnung strömungsleitend in Verbindung gebracht werden. Alternativ oder ergänzend kann eine Gehäusekomponente, insbesondere mit einem Ventil, einer Pumpe, einem Sensor oder einem Kühler, mit dem Funktionselement derart gekoppelt werden, dass die Einströmöffnung und die Ausströmöffnung strömungsleitend in Verbindung gebracht werden. Das Ventil kann insbesondere ein Rotationsventil oder ein Trommelventil sein. Derartige Ventile sind insbesondere geeignet, in eine Anordnung für den Transport von Medien integriert zu werden. Des Weiteren sind Rotationsventile kostengünstig herstellbar und ermöglichen eine gleichzeitige Ansteuerung mehrerer Fluidkanäle.

Insbesondere wird dabei das Ventil, die Pumpe, der Sensor oder der Kühler vor dem Blasformen in dem Aufnahmeraum und/oder der Gehäusekomponente angeordnet und bildet die strömungsleitende Verbindung zwischen der Einströmöffnung und Ausströmöffnung oder wird mit einer strömungsleitenden Verbindung zwischen der Einströmöffnung und Ausströmöffnung verbunden. Darauffolgend wird durch das Blasformen des Vorformlings die Einströmöffnung mit dem Einlasskanal und die Ausströmöffnung mit dem Auslasskanal verbunden, wodurch die strömungsleitende Verbindung zwischen dem Auslasskanal und dem Einlasskanal über das Ventil, die Pumpe, den Sensor oder den Kühler ausgebildet wird.

Eine weitere Ausgestaltung des Verfahrens kann zudem vorsehen, dass das Funktionselement, insbesondere mit dem Aufnahmeraum und/oder mit der gekoppelten Gehäusekomponente, durch den Vorformling während des Ausformens vollständig umhüllt wird.

Durch ein solches Umhüllen des Funktionselements, insbesondere mit dem Aufnahmeraum und/oder mit der gekoppelten Gehäusekomponente, wird eine Anordnung ausgebildet, bei welcher das Funktionselement, vorzugsweise mit der Pumpe, dem Ventil, dem Sensor oder dem Kühler, vollständig von dem Grundkörper umgeben ist, wodurch in einfacher und kostenoptimierter Weise eine gekapselte, besonders fluiddichte Abdichtung zu einer Außenseite der Anordnung ausgebildet wird.

Einige Ausgestaltungen der erfindungsgemäßen Vorrichtung, der Verwendung und des Verfahrens werden nachfolgend anhand der Figuren näher erläutert. Diese zeigen, jeweils schematisch:
- Fig. 1: eine schematische Schnittansicht einer ersten Ausführungsform einer offenbarungsgemäßen Anordnung für den Transport von Medien;
- Fig. 2: eine schematische Schnittansicht einer zweiten Ausführungsform einer offenbarungsgemäßen Anordnung für den Transport von Medien, mit zeichnerisch angedeutetem Außenumfangsabschnitt;
- Fig. 3: im Detail den Grundkörper mit einem Teil des Funktionselements der Ausführungsform gemäß Fig. 2.

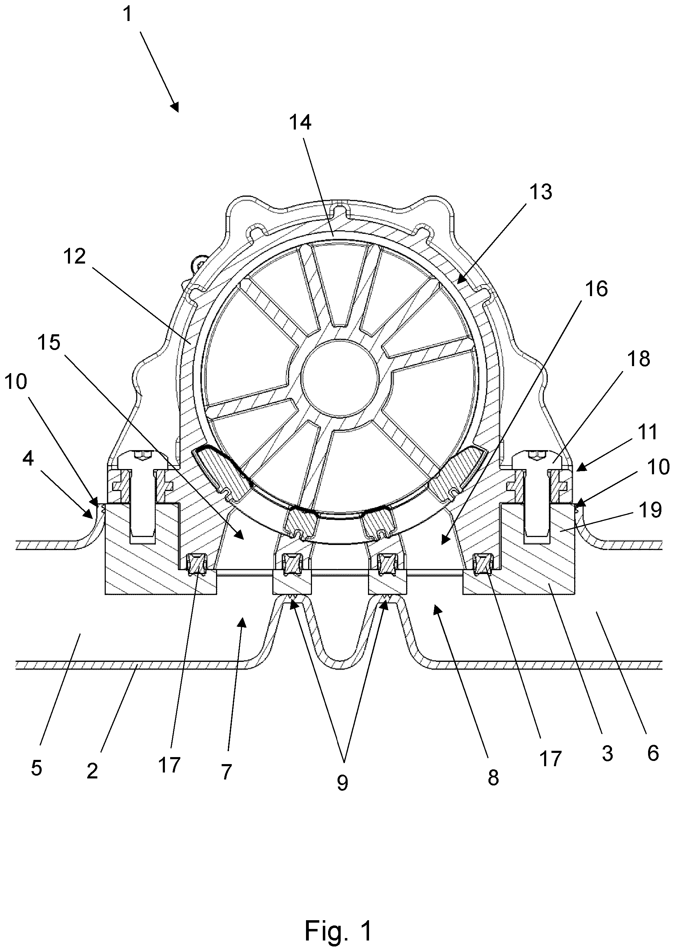

**Fig. 1** zeigt eine erste Ausführungsform einer offenbarungsgemäßen Anordnung 1 für den Transport von Medien, wobei **Fig. 1** eine schematische Schnittansicht der Anordnung 1 ist. Eine solche Anordnung 1 bildet eine Verteilstruktur, welche beispielsweise als Bestandteil eines Temperierkreislaufs in einem nicht näher dargestellten Elektrofahrzeug zum Einsatz kommt. Über die Anordnung 1 können Temperiermedien, z. B. Kühlmittel in Form von Kühlwasser, oder auch andere Medien verteilt und zu den zu temperierenden oder sonstigen Komponenten des Elektrofahrzeugs, beispielsweise den Akkumulatoren, den Elektromotoren, der Leistungselektronik oder den Wärmeübertragern der Fahrgastzellentemperierung, geleitet werden. In einer anderen erfindungsgemäßen Ausführungsform ist die Anordnung 1 Bestandteil der Temperierung eines stationären Energiespeichers.

Die Anordnung 1 umfasst einen als Blasformteil ausgebildeten Grundkörper 2 und ein Funktionselement 3, das formschlüssig mit dem Grundkörper 2 verbunden ist. Der Grundkörper 2 und das Funktionselement 3 sind aus einem Kunststoffmaterial ausgebildet, beispielsweise Polypropylen, Polyamid oder einem Polyethylen. Ebenso können der Grundkörper 2 und das Funktionselement 3 aus anderen Materialien ausgebildet sein.

Der Grundkörper 2 ist aus einem Kunststoff ausgebildet, dessen Schmelztemperatur für den Blasformprozess geeignet ist und unterhalb der Schmelztemperatur des für das Funktionselement 3 ausgewählten Kunststoffs liegt.

Vorzugsweise ist das Funktionselement 3 aus einem spritzgießfähigen Kunststoff ausgebildet, dessen Schmelztemperatur derart gewählt ist, dass das Funktionselement 3 während des Blasformens formstabil bleibt.

Das Funktionselement 3 ist formschlüssig und stoffschlüssig an dem Grundkörper 2 festgelegt, wobei die formschlüssige Verbindung zwischen dem Grundkörper 2 und dem Funktionselement 3 durch Umformen eines Vorformlings zum Grundkörper 2 während des Blasformens ausgebildet wird. Hierzu wird der Vorformling zusammen mit dem Funktionselement 3 in ein Blasformwerkzeug eingelegt, wobei sich der Vorformling während des Blasformens an das Funktionselement 3 anlegt, insbesondere an einen Außenumfangsabschnitt 4 des Funktionselements 3, und die formschlüssige Verbindung ausgebildet wird.

Während des Blasformens wird der Vorformling in der Weise umgeformt, dass der Grundkörper 2 einen Einlasskanal 5 und einen Auslasskanal 6 bildet. Der Einlasskanal 5 und der Auslasskanal 6 bilden separate Strömungskanäle der Anordnung 1.

Das Funktionselement 3 ist durch ein im Wesentlichen schalenförmiges Grundelement gebildet, das eine beliebige geometrische Ausgestaltung aufweisen kann. Gemäß der in **Fig. 1** dargestellten Ausführungsform weist das Funktionselement 3 eine scheibenförmige Geometrie auf. Abweichend zu einer solchen scheibenförmigen Geometrie kann das Funktionselement 3 ebenso eine ovale, eckige oder freiförmige Geometrie aufweisen.

In dem Funktionselement 3 sind eine Einströmöffnung 7 und eine Ausströmöffnung 8 ausgebildet. Ebenso können in dem Funktionselement 3 zwei oder mehr Einströmöffnungen 7 und/oder zwei oder mehr Ausströmöffnungen 8 ausgebildet sein. Die Einströmöffnung 7 und Ausströmöffnung 8 bilden Durchgänge in dem Funktionselement 3 und sind beispielsweise als Bohrungen vorgesehen.

Die Einströmöffnung 7 des Funktionselements 3 ist mit dem Einlasskanal 5 des Grundkörpers 2 strömungsleitend verbunden. Die Ausströmöffnung 8 des Funktionselements 3 ist mit dem Auslasskanal 6 des Grundkörpers 2 strömungsleitend verbunden, wobei die strömungsleitenden Verbindungen zwischen der Einströmöffnung 7 und dem Einlasskanal 5 sowie zwischen der Ausströmöffnung 8 und dem Auslasskanal 6 jeweils durch das Umformen des Vorformlings zum Grundkörper 2 während des Blasformens ausgebildet werden.

Hierzu wird der Vorformling in der Weise zu dem Grundkörper 2 umgeformt, dass der Einlasskanal 5 ausgebildet und mit der Einströmöffnung 7 strömungsleitend verbunden wird und gleichzeitig der Auslasskanal 6 ausgebildet und mit der Ausströmöffnung 8 strömungsleitend verbunden wird. Mit anderen Worten, durch nur einen Blasformschritt werden sowohl der Einlasskanal 5 und Auslasskanal 6 als auch die strömungsleitenden Verbindungen zwischen dem Einlasskanal 5 und der Einströmöffnung 7 und zwischen dem Auslasskanal 6 und der Ausströmöffnung 8 ausgebildet.

An dem Funktionselement 3 sind zwei erste Dichtkonturen 9 ausgebildet, durch welche das Funktionselement 3 und der Grundkörper 2 stoffschlüssig verbunden und der Einlasskanal 5 und Auslasskanal 6 fluiddicht zueinander abgedichtet sind. Die Dichtkonturen 9 weisen im Querschnitt eine dreieckförmige Gestalt auf. Das Material der Dichtkonturen 9 ist derart gewählt, dass diese während des Blasformens und der damit verbundenen Formgebung des Grundkörpers 2 zumindest teilweise aufschmelzen und sich das Funktionselement 3 im Bereich der Dichtkonturen 9 stoffschlüssig und mediendicht mit dem Grundkörper 2 verbindet.

Zudem sind an dem Funktionselement 3 zwei zweite Dichtkonturen 10 ausgebildet, durch welche das Funktionselement 3 und der Grundkörper 2 stoffschlüssig und mediendicht miteinander verbunden und der Einlasskanal 5 und Auslasskanal 6 fluiddicht zu einer Außenseite abgedichtet sind. Die zweiten Dichtkonturen 10 erstrecken sich vollumfänglich am Außenumfangsabschnitt 4 des Funktionselements 3 und sind zum Ausbilden der stoffschlüssigen Verbindung zwischen dem Funktionselement 3 und dem Grundkörper 2 in gleicher Weise ausgebildet wie die ersten Dichtkonturen 9.

An dem Funktionselement 3 ist eine Kopplungseinrichtung 11 ausgebildet, durch welche eine Gehäusekomponente 12 mit dem Funktionselement 3 gekoppelt ist. Bei der Gehäusekomponente 12 handelt es sich um ein beliebiges Gehäuseelement, das einen Aufnahmeraum 13 zum Aufnehmen eines Ventils, einer Pumpe, eines Sensors oder eines Kühlers bildet. Beispielhaft ist in **Fig. 1** die Gehäusekomponente 12 mit einem im Aufnahmeraum 13 angeordneten Ventil 14 dargestellt. Bei der vorliegenden Ausgestaltung ist das Ventil 14 als Rotationsventil ausgestaltet, was die Ansteuerung vieler Kanäle auf kleinem Raum ermöglicht.

Durch die Gehäusekomponente 12 ist die Einströmöffnung 7 mit der Ausströmöffnung 8 strömungsleitend verbunden. Das Ventil 14 ist in der strömungsleitenden Verbindung zwischen der Einströmöffnung 7 und Ausströmöffnung 8 angeordnet. Dadurch sind ein einströmseitiger Strömungsbereich 15 und ein ausströmseitiger Strömungsbereich 16 gebildet.

Durch die mit dem Funktionselement 3 gekoppelte Gehäusekomponente 12 kann ein Medium über die Ausströmöffnung 8 aus dem Auslasskanal 6 in die Gehäusekomponente 12 geleitet und dem Ventil 14 zugeführt werden. Anschließend kann das Medium das Ventil 14 durchströmen und über die Einströmöffnung 7 in den Einlasskanal 5 eingeleitet werden. Es versteht sich, dass in der Gehäusekomponente 12 ebenso eine Pumpe angeordnet sein kann, um beispielsweise einen Volumenstrom des Mediums zu erzeugen, ein Sensor angeordnet sein kann, um beispielsweise einen Sensorwert zu erfassen, oder ein Kühler angeordnet sein, um beispielsweise das Medium zu kühlen oder zu erwärmen.

Durch zwei die Einströmöffnung 7 und Ausströmöffnung 8 umgreifende Dichtelemente 17, beispielsweise in Form von O-Ringen, sind der einströmseitige Strömungsbereich 15 und der ausströmseitige Strömungsbereich 16 zueinander sowie zu einer Außenseite der Anordnung 1 fluiddicht abgedichtet.

Die Kopplungseinrichtung 11 ist bei der dargestellten Ausführungsform durch eine Schraubverbindung ausgebildet, sodass die Gehäusekomponente 12 durch mehrere Schrauben 18 mit dem Funktionselement 3 verschraubt ist. Alternativ kann die Kopplungseinrichtung 11 ebenso durch eine Niet-, Rast-, Clips-, Schweiß- oder Klebeverbindung oder durch eine beliebige andersartige Verbindungseinrichtung ausgebildet sein.

Die Kopplungseinrichtung 11 umfasst zudem eine Zentriereinrichtung 19, die am Funktionselement 3 durch einen außenumfangsseitig ausgebildeten Absatz vorgesehen ist. Die Zentriereinrichtung 19 ist korrespondierend zu einer an der Gehäusekomponente 12 vorgesehenen Ausnehmung ausgebildet, sodass die Gehäusekomponente 12 durch ein Angreifen am Absatz zentriert am Funktionselement 3 montiert ist.

Durch die in **Fig. 1** gestrichelt dargestellte Linie ist eine alternative oder ergänzende Ausführungsform der Anordnung 1 angedeutet, bei welcher das Funktionselement 3 und die mit dem Funktionselement 3 gekoppelte Gehäusekomponente 12 vollständig von einem Wandungsabschnitt 20 des Grundkörper 2 umhüllt sind. Mit anderen Worten, das Funktionselement 3 und die Gehäusekomponente 12 sind innerhalb des Grundkörpers 2 angeordnet bzw. von dem Grundkörper 2 eingekapselt. Dieses Umhüllen des Funktionselements 3 und der Gehäusekomponente 12 wird durch das Umformen des Vorformlings zum Grundkörper 2 während des Blasformens vorgesehen.

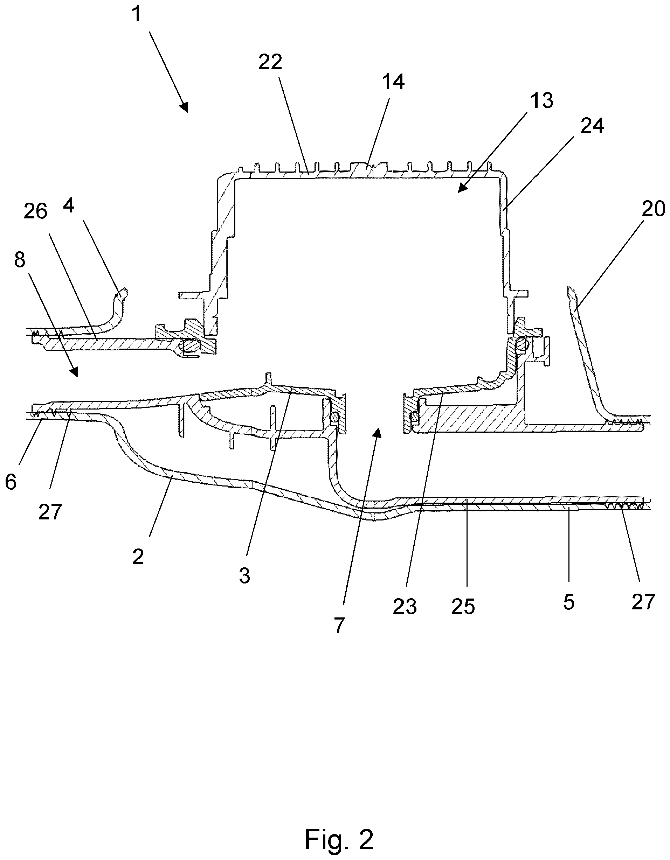

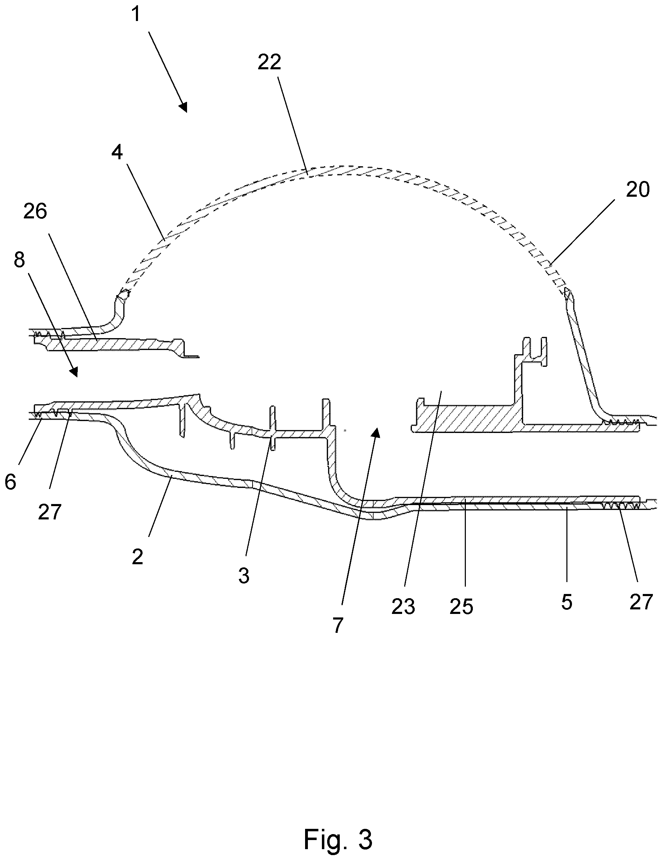

In den **Fig. 2** und **3** ist eine alternative Ausführungsform einer offenbarungsgemäßen Anordnung 1 für den Transport von Medien dargestellt. **Fig. 2** zeigt eine schematische Schnittansicht der Anordnung 1, wobei der Grundkörper 2 in dieser Darstellung im Deckelbereich aufgebrochen und somit nicht vollständig gezeigt ist. **Fig. 3** zeigt eine schematische Schnittansicht der Anordnung 1 gemäß **Fig. 2****,** wobei in dieser Figur das Funktionselement 3 nur teilweise dargestellt ist, der Grundkörper 2 aber vollständig.

Gemäß dieser Ausführungsform der Anordnung 1 bildet das Funktionselement 3 einen Aufnahmeraum 13 zum Aufnehmen des in **Fig. 2** nicht näher dargestellten Ventils 14 oder zum Aufnehmen einer Pumpe, eines Sensors oder eines Kühlers.

Über eine Zugangsöffnung ist ein Zugang zu dem Aufnahmeraum 13 gebildet, um das Ventil, die Pumpe, den Sensor oder den Kühler in den Aufnahmeraum 13 einzubringen. Durch ein lösbares Deckelelement 22 ist der Aufnahmeraum 13 fluiddicht verschlossen.

Durch den Aufnahmeraum 13 sind die Einströmöffnung 7 und die Ausströmöffnung 8 strömungsleitend verbunden, wobei das Ventil 14 in der Weise in dem Aufnahmeraum 13 angeordnet wird, dass dieses die strömungsleitende Verbindung bildet. Das Ventil 14 ist somit in dem Aufnahmeraum 13 als Fluidverbindung zwischen der Einströmöffnung 7 und der Ausströmöffnung 8 angeordnet.

Wie in **Fig. 2** ersichtlich, ist die Einströmöffnung 7 in einem Bodenabschnitt 23 des Funktionselements 3 ausgebildet. Der Bodenabschnitt 23 bildet eine bodenseitige Begrenzung des Aufnahmeraums 13. Die Ausströmöffnung 8 ist in einem Seitenwandabschnitt 24 des Funktionselements 3 ausgebildet. Der Seitenwandabschnitt 24 bildet eine seitliche Begrenzung des Aufnahmeraums 13.

An die Einströmöffnung 7 schließt sich ein durch das Funktionselement 3 gebildeter Einlassstutzen 25 an, der sich vom Bodenabschnitt 23 als Umlenkung seitlich von dem Funktionselement 3 weg erstreckt. Der Einlassstutzen 25 mündet in den Einlasskanal 5, wodurch bei dieser Ausführungsform der Anordnung 1 die strömungsleitende Verbindung zwischen dem Einlasskanal 5 und der Einströmöffnung 7 gebildet ist.

An die Ausströmöffnung 8 schließt sich ein durch das Funktionselement 3 gebildeter Auslassstutzen 26 an, der sich vom Seitenwandabschnitt 24 seitlich von dem Funktionselement 3 weg erstreckt. Der Auslassstutzen 26 mündet in den Auslasskanal 6, wodurch die strömungsleitende Verbindung zwischen dem Auslasskanal 6 und der Ausströmöffnung 8 gebildet ist.

Wie in den **Fig. 2** und **3** dargestellt, sind der Einlassstutzen 25 und der Auslassstutzen 26 in entgegengesetzte Richtungen weisend am Funktionselement 3 ausgebildet. Alternativ kann ebenso vorgesehen sein, dass diese in einem abweichenden Winkel zueinander ausgerichtet sind, z. B. in einem Winkel von 90°.

An Endabschnitten des Einlassstutzens 25 und des Auslassstutzens 26 sind außenumfangsseitig jeweils Dichtkonturen 27 ausgebildet. Durch die Dichtkontur 27 wird während des Blasformens eine stoffschlüssige und mediendichte Verbindung zwischen dem Funktionselement 3 und dem Grundkörper 2 ausgebildet.

Gemäß einer alternativen oder ergänzenden Ausführungsform der Anordnung 1 kann vorgesehen sein, dass das Funktionselement 3 mit dem durch das Funktionselement 3 gebildeten Aufnahmeraum 13 vollständig durch einen Wandungsabschnitt 20 des Grundkörpers 2 umhüllt ist. Dadurch ist das Funktionselement 3 mit dem nicht näher dargestellten, im Aufnahmeraum 13 aufgenommenen Ventil 14 innerhalb des Grundkörpers 2 angeordnet bzw. durch diesen eingekapselt. Das Umhüllen des Funktionselements 3 erfolgt dabei ebenso wie bei der vorherigen Ausführungsform durch das Umformen des Vorformlings zum Grundkörper 2 während des Blasformens.

## Patentansprüche

1. Anordnung (1) für den Transport von Medien, umfassend einen als Blasformteil ausgebildeten Grundkörper (2), der wenigstens einen Einlasskanal (5) und wenigstens einen Auslasskanal (6) und zumindest ein Funktionselement (3) aufweist, wobei das Funktionselement (3) durch Umformen des Grundkörpers (2) während des Blasformens formschlüssig mit dem Grundkörper (2) verbunden ist, wobei das Funktionselement (3) wenigstens eine Einströmöffnung (7) und eine Ausströmöffnung (8) aufweist, wobei die Einströmöffnung (7) mit dem Einlasskanal (5) des Grundkörpers (2) und die Ausströmöffnung (8) mit dem Auslasskanal (6) des Grundkörpers (2) strömungsleitend verbunden sind, wobei die strömungsleitenden Verbindungen von Einströmöffnung (7) und Ausströmöffnung (8) durch das Umformen des Grundkörpers (2) während des Blasformens ausgebildet sind.

2. Anordnung nach Anspruch 1, **dadurch gekennzeichnet, dass** der Einlasskanal (5) und der Auslasskanal (6) als separate Strömungskanäle ausgebildet sind.

3. Anordnung nach Anspruch 1 oder 2, **dadurch gekennzeichnet, dass** das Funktionselement (3) eine Kopplungseinrichtung (11) aufweist, durch welche eine Gehäusekomponente (12), insbesondere zum Aufnehmen eines Ventils, einer Pumpe, eines Sensors oder eines Kühlers, mit dem Funktionselement (3) derart koppelbar ist, dass die Einströmöffnung (7) und die Ausströmöffnung (8) strömungsleitend in Verbindung stehen.

4. Anordnung nach Anspruch 3, **dadurch gekennzeichnet, dass** die Kopplungseinrichtung (11) wenigstens ein die Einströmöffnung (7) umgreifendes Dichtelement (17) und/oder wenigstens ein die Ausströmöffnung (8) umgreifendes Dichtelement (17) aufweist, wobei in einer Kopplungskonfiguration des Funktionselements (3) mit der Gehäusekomponente (12) ein einströmseitiger Strömungsbereich (15) und ein ausströmseitiger Strömungsbereich (16) zueinander abdichtbar sind.

5. Anordnung nach Anspruch 3 oder 4, **dadurch gekennzeichnet, dass** die Kopplungseinrichtung (11) wenigstens eine Zentriereinrichtung (19) zum Montieren der Gehäusekomponente (12) aufweist.

6. Anordnung nach einem der Ansprüche 1 bis 5, **dadurch gekennzeichnet, dass** das Funktionselement (3) durch ein im Wesentlichen schalenförmiges Grundelement gebildet ist.

7. Anordnung nach einem der Ansprüche 1 bis 6, **dadurch gekennzeichnet, dass** das Funktionselement (3) wenigstens eine Dichtkontur (9) aufweist, durch welche das Funktionselement (3) mit dem Grundkörper (2) stoffschlüssig verbunden und der Einlasskanal (5) zu dem Auslasskanal (6) abgedichtet ist, und/oder wenigstens eine Dichtkontur (10) aufweist, durch welche das Funktionselement (3) mit dem Grundkörper (2) stoffschlüssig verbunden und der Einlasskanal (5) und/oder der Auslasskanal (6) zu einer Außenseite abgedichtet sind.

8. Anordnung nach einem der Ansprüche 1 bis 7, **dadurch gekennzeichnet, dass** das Funktionselement (3) einen Aufnahmeraum (13) bildet, insbesondere zum Aufnehmen eines Ventils, einer Pumpe, eines Sensors oder eines Kühlers, und der Aufnahmeraum (13) eine strömungsleitende Verbindung zwischen der Einströmöffnung (7) und der Ausströmöffnung (8) bildet.

9. Anordnung nach einem der Ansprüche 1 bis 8, **dadurch gekennzeichnet, dass** das Funktionselement (3) einen der Einströmöffnung (7) zugeordneten Einlassstutzen (25) und/oder einen der Ausströmöffnung (8) zugeordneten Auslassstutzen (26) aufweist, wobei der Einlassstutzen (25) in den Einlasskanal (5) und/oder der Auslassstutzen (26) in den Auslasskanal (6) des Grundkörpers (2) mündet.

10. Anordnung nach einem der Ansprüche 1 bis 9, **dadurch gekennzeichnet, dass** die Einströmöffnung (7) in einem Bodenabschnitt (23) des Funktionselements (3) ausgebildet ist und/oder dass die Ausströmöffnung (8) in einem Seitenwandabschnitt (24) des Funktionselements (3) ausgebildet ist.

11. Anordnung nach einem der Ansprüche 1 bis 10, **dadurch gekennzeichnet, dass** das Funktionselement (3) durch das Umformen des Grundkörpers (2) während des Blasformens vollständig von dem Grundkörper (2) umhüllt ist.

12. Verfahren zur Herstellung einer Anordnung (1) für den Transport von Medien, insbesondere einer Anordnung (1) nach einem der vorherigen Ansprüche, bei welchem zumindest ein Funktionselement (3) und ein aus polymerem Material bestehender Vorformling bereitgestellt und in einer Blasform angeordnet werden, wobei aus dem Vorformling ein Grundkörper (2) ausgebildet wird und sich der Vorformling während des Ausformens zur Herstellung einer Verbindung an das Funktionselement (3) anlegt, **dadurch gekennzeichnet, dass** während des Ausformens des Vorformlings eine strömungsleitende Verbindung zwischen einer Einströmöffnung (7) des Funktionselements (3) und einem Einlasskanal (5) des Grundkörpers (2) und zwischen einer Ausströmöffnung (8) des Funktionselements (3) und einem Auslasskanal (6) des Grundkörpers (2) ausgebildet wird.

13. Verfahren nach Anspruch 12, **dadurch gekennzeichnet, dass** sich der Vorformling während des Ausformens derart verformt, dass der Einlasskanal (5) und der Auslasskanal (6) als separate Strömungskanäle des Grundkörpers (2) ausgebildet werden.

14. Verfahren nach Anspruch 12 oder 13, **dadurch gekennzeichnet, dass** in einem durch das Funktionselement (3) gebildeten Aufnahmeraum (13) ein Ventil, eine Pumpe, ein Sensor oder ein Kühler angeordnet wird und die Einströmöffnung (7) und die Ausströmöffnung (8) strömungsleitend in Verbindung gebracht werden und/oder eine Gehäusekomponente (12), insbesondere mit einem Ventil, einer Pumpe, einem Sensor oder einem Kühler, mit dem Funktionselement (3) derart gekoppelt wird, dass die Einströmöffnung (7) und die Ausströmöffnung (8) strömungsleitend in Verbindung gebracht werden.

15. Verfahren nach Anspruch 14, **dadurch gekennzeichnet, dass** das Funktionselement (3), insbesondere mit dem Aufnahmeraum (13) und/oder mit der gekoppelten Gehäusekomponente (12), durch den Vorformling während des Ausformens vollständig umhüllt wird.
